# EUROPÄISCHE PATENTSCHRIFT

(11) **EP 2 698 861 B1**
(45) Veröffentlichungstag und Bekanntmachung des Hinweises auf die Patenterteilung: **14.12.2016**
(21) Anmeldenummer: 12180280.5
(22) Anmeldetag: 13.08.2012
(51) Int. Cl.: H01M 10/48

(54) **HV-Batteriesystem für ein Kraftfahrzeug**
HV battery system for a motor vehicle
Système de batterie haute tension pour un véhicule

(43) Veröffentlichungstag der Anmeldung: 19.02.2014
(73) Patentinhaber: Samsung SDI Co., Ltd., Yongin-si, Gyeonggi-do (KR)
(72) Erfinder: Hausberger, Ingo, 8020 Graz (AT); Klobasa, Roland, 8020 Graz (AT); Lettner, Markus, 8521 Wettmannstätten (AT); Reiter, Michael, 8461 Berghausen (AT)
(74) Vertreter: Gulde & Partner

(56) Entgegenhaltungen:
- US-A1- 2008 050 645
- US-A1- 2009 191 453
- US-A1- 2011 012 606

## Beschreibung

Die Erfindung betrifft ein HV-Batteriesystem für ein Kraftfahrzeug nach der Art von Anspruch 1.

HV-Batteriesysteme setzen sich neben den Batteriezellen aus einer Vielzahl von Komponenten zusammen. Üblicherweise ist für ein Batteriesystem mit Li-Ion-Zellen eine elektronische Steuerung erforderlich, welche die Zellspannung und die Temperatur überwacht, die Betriebsspannung, den Isolationswiderstand sowie den Ladezustand des Systems ermittelt, und gegebenenfalls Trenneinrichtungen steuert. Beim Einsatz in Elektro- oder Hybrid-Kraftfahrzeugen wird die Energie der Batterie durch einen Umrichter zu einer oder mehreren elektrischen Maschinen transferiert, und umgekehrt (rückgespeist). Der Umrichter erzeugt dabei mittels Leistungstransistoren aus dem Batterie-Gleichstrom (DC) einen PWM-Wechselstrom (AC). Durch die hochfrequente Steuerung der Leistungstransistoren im Umrichter kommt es zu Störsignalen auf den DC-Leitungen zwischen Batterie und Umrichter. Derartige Störsignale können auch von einem Ladegerät, oder einem am HV-Bus angeschlossenen DC/DC-Wandler erzeugt werden. Bekannt ist, derartige Batteriesysteme in einem geschlossenen Gehäuse anzuordnen. Dies dient einerseits zum Schutz der Batteriekomponenten vor äußeren Einflüssen, andererseits zum Schutz der Umgebung vor der innerhalb der Batterie anliegenden Spannung. Üblicherweise sind die elektronischen Steuereinheiten innerhalb des Batteriegehäuses angeordnet. Durch die Schaltvorgänge dieser Steuereinheiten werden ebenfalls Störsignale erzeugt.

Wie beschrieben sind die Komponenten einer Batterie Batterie-externen Störsignalen sowie Batterie-internen Störsignalen ausgesetzt. Diese Störsignale können die Funktionsfähigkeit des Batteriesystems erheblich beeinträchtigen. Durch das hochfrequente Störsignal, welches beispielsweise von einem Umrichter ausgeht, wird insbesondere die Erfassung der Systemspannung erheblich beeinträchtigt. Auch können Elektronikeinheiten durch besonders hohe Spannungsspitzen geschädigt werden.

Die US 2008 0050645 A1 zeigt ein System gemäß dem vorzeichnenden Teil des Anspruchs 1.

Die DE 10 2008 041 518 A1 beschreibt ein Akkumulatorüberwachungssystem mit einer Potential-Trennschaltung zur Verbindung einer Datenverarbeitungsschaltung und einer Erfassungsschaltung.

Die DE 10 2010 029 461 A1 zeigt Gleichstromquellenanordnungen mit Ankopplung an ein Gehäuse sowie unter Verwendung von Kondensatoren und EMI-Filtern.

Eine Vorrichtung zur Steuerung und Überwachung von in Reihe geschalteten Gleichspannungsquellen zeigt die DE 10 2010 030 353 A1. Jeder Gleichspannungsquelle ist ein Zellmonitor zugeordnet. Über ein Isolationsmodul erfolgt eine galvanische Entkopplung von Zellmonitor und zentraler Steuereinheit.

Eine abschirmende Unterbringung einer Batterie sowie einer Elektronik beschreibt die DE 36 26 593 A1. Die Elektronik ist im Batteriegehäuse untergebracht.

Eine Abschirmung eines HV-Teils beschreibt die DE 601 33 613 T2, ferner zeigt die DE 11 2008 003 519 T5 die Verwendung verdrillter Kabel bei einer bidirektionalen Energieverwaltung.

Die Aufgabe der vorliegenden Erfindung besteht darin, ein HV-Batteriesystem in gegenüber den bekannten Lösungen verbesserter Ausführung vorzuschlagen.

Diese Aufgabe wird gelöst durch die Merkmale des Vorrichtungsanspruches. Weiterbildungen ergeben sich aus den Unteransprüchen.

Die erfindungsgemäße Lösung ist ein HV-Batteriesystem für ein Kraftfahrzeug, bestehend aus Zellen und Komponenten zur Steuerung und Überwachung der Zellen und der Funktion des Batteriesystems, wobei die Zellen über Hochvoltleitungen und eine Hochvoltschnittstelle mit außerhalb des Batteriesystems angeordneten Einrichtungen wie insbesondere einem Umrichter verbunden sind, wobei wenigstens den Komponenten zur Steuerung und Überwachung der Funktion des Batteriesystems ein metallisch leitfähiges Schirmblech, insbesondere in Form eines Gehäuses zugeordnet ist, und die nach außen führenden Leitungen der Hochvoltschhittstelle durch Gleichtaktstörungsdämpfer geführt sind.

Insbesondere ist somit ein HV-Batteriesystem mit in Reihe und oder parallel geschalteten Zellen vorgesehen, wobei diese Zellen mit innerhalb des Batteriesystems angeordneten Komponenten zur Steuerung und Überwachung der Funktion des Batteriesystems gekoppelt sind und über Hochvoltleitungen mit außerhalb des Batteriesystems angeordneten Einrichtungen wie insbesondere einem Umrichter verbunden sind, wobei wenigstens den Komponenten zur Steuerung und Überwachung der Funktion des Batteriesystems ein metallisch leitfähiges Schirmblech, insbesondere in Form eines Gehäuses zugeordnet ist, die nach außen führenden Hochvoltleitungen durch Gleichtaktstörungsdämpfer geführt sind, und die Hochvoltschnittstellen über Kondensatoren am Schirmblech bzw. dem Gehäuse angebunden sind.

### Dieses Grundkonzept weiterbildend ist vorgesehen:

Eine Elektronikeinheit ist als Batterie-Steuergerät ausgeführt, welches den Gesamtzustand des Batteriesystems überwacht und beispielsweise den Ladungsausgleich zwischen den Batteriezellen steuert. Dieses Batterie-Steuergerät ist innerhalb des Batteriegehäuses angeordnet und mittels eines eigenen Schirmbleches abgedeckt, vorzugsweise in einem eigenen metallisch leitfähigen Gehäuseteil innerhalb des Batteriegehäuses angeordnet.

Eine weitere Elektronikeinheit ist als Batteriemodul-Steuergerät ausgebildet, welches insbesondere die Zustände wie Zellspannung jeder einzelnen Batteriezelle und die Temperatur zumindest einzelner Batteriezellen erfasst und entsprechende Signale an die BMU (Batterie Management Unit) weiterleitet. Dieses Batteriemodul-Steuergerät ist über eine geschirmte Leitung mit dem Batterie-Steuergerät verbunden, wobei die Ankopplung an das Batterie-Steuergerät galvanisch getrennt und über Optokoppler oder insbesondere eine induktive Kopplung erfolgt.

Vorzugsweise sind sowohl das Batterie-Steuergerät sowie das Batteriemodul-Steuergerät geschirmt bzw. in einem separaten Gehäuse innerhalb des Batteriegehäuses angeordnet.

Ein Stromsensor innerhalb der Batterieschirmung bzw. des Batteriegehäuses ist über geschirmte und/oder verdrillte Leitungen mit dem Batterie-Steuergerät verbunden.

Die Hochvoltabgriffe, über welche das Batterie-Steuergerät die Spannung des HV-Batteriesystems erfasst, sind ebenfalls geschirmt ausgeführt.

Weiterhin ist vorgesehen, dass Trenneinrichtungen für die Hochvolt-Schnittstelle und die Vorladeschaltung über verdrillte Leitungen mit dem Batterie-Steuergerät verbunden sind bzw. die genannten Komponenten über derartig verdrillte Leitungen von dem Batterie-Steuergerät betätigt und gesteuert werden.

Temperatursensoren, welche die Temperatur an definierten Stellen der Hochvoltzellen erfassen sowie weitere Sensoren zur Erfassung der Temperatur der Kühlflüssigkeit sind ebenfalls über verdrillte Leitungen mit dem Batterie-Steuergerät verbunden.

Weitere Batteriemodul-Steuergeräte sind nach dem Daisy-Chain-Prinzip einer seriellen Hintereinanderschaltung mit dem Batteriemodul-Steuergerät verbunden. Die Verbindungsleitungen sind hierbei verdrillt bzw. es finden geschirmte Leitungen Verwendung. Bei geschirmten Leitungen sind Serienkondensatoren vorgesehen.

Letztlich ist ein Kondensator zwischen Plus und der Minus der Hochvoltleitungen vorgesehen. Ferner finden Ableitkondensatoren zwischen dem Batteriegehäuse und der Masse des Batterie-Steuergerätes Verwendung.

Des Weiteren erfolgt die Erläuterung eines Ausführungsbeispiels der Erfindung an Hand der Zeichnungen.

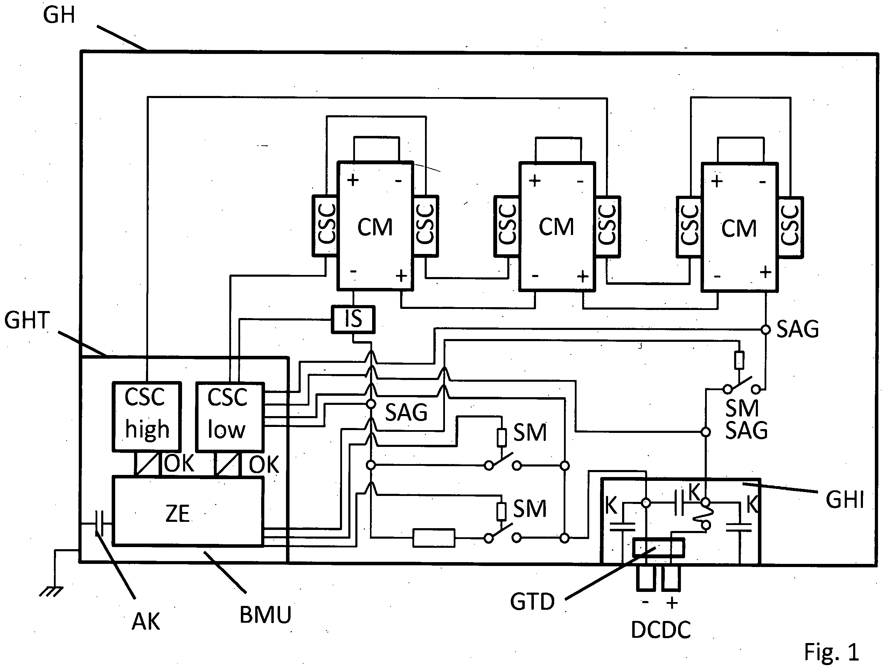

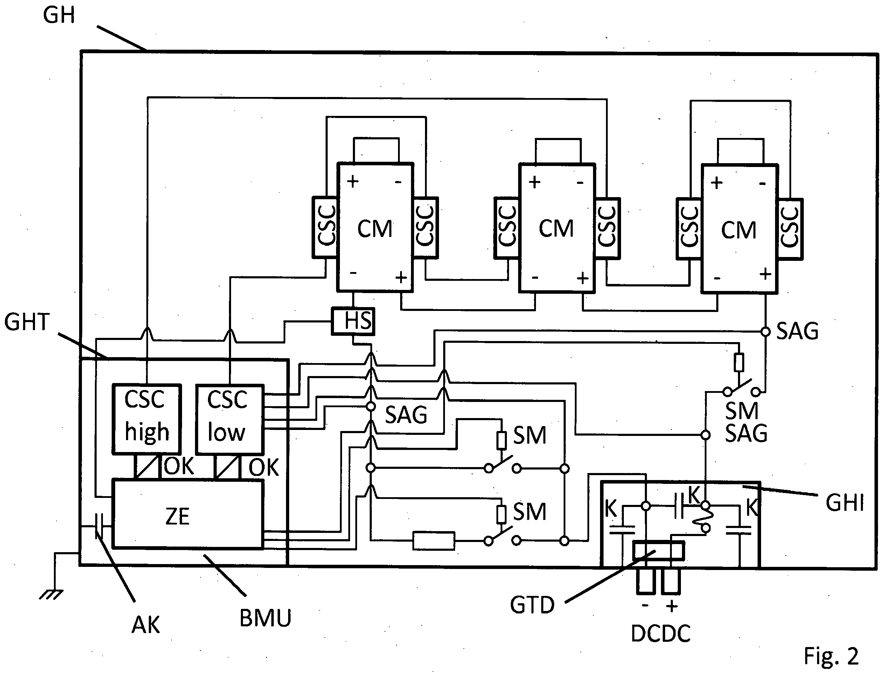

Die Figuren 1 und 2 zeigen ein HV-Batteriesystem für ein Kraftfahrzeug, wobei dieses HV-Batteriesystem eine Anzahl von Zellen CM aufweist, welche in Serie geschaltet die entsprechende Hochvolt-Spannung bereitstellen. Diese HV-Spannung liegt an dem Ausgang DCDC an und wird insbesondere einem nicht dargestellten Umrichter zugeführt. Eine zentrale Einheit ZE des Batterie-Steuergerätes BMU ist galvanisch getrennt und insbesondere über Optokoppler OK (oder mittels einer induktiven Kopplung) mit einer ersten und einer zweiten Batteriemodul-Steuerung CSC-Bus low und CSC-Bus high verbunden.

Die zwei Batteriemodul-Steuerungen CSC-Bus low und CSC-Bus high sind über zwei Daisy-Chain Ketten mit an den Zellen CM angeordneten CSC-Komponenten, Modulen CSC verbunden, über welche unterschiedliche Größen erfassbar sind, beispielsweise Spannung und/oder Temperatur einzelner Zellen CM. Durch die zwei Daisy-Chain Ketten und die beiden Batteriemodul-Steuerungen CSC-Bus low und CSC-Bus high ist eine hohe Signalrate erzielbar.

Das beschriebene Batterie-Steuergerät BMU ist in einem separaten, geschirmten Gehäuseteil GHT innerhalb des Gehäuses GH des HV-Batteriesystems untergebracht. Zwischen dem Batteriegehäuse GH und der Masse des Batterie-Steuergerätes BMU ist ein Ableitkondensator AK geschaltet.

In der Ausführung nach Figur 1 ist als Stromsensor IS eine einen Shunt-Widerstand aufweisende Einrichtung vorgesehen, welche mit der Batteriemodul-Steuerung CSC-Bus low verbunden ist. Durch die erforderliche galvanische Trennung führt die Sensorleitung zum galvanische getrennten Abschnitt der BMU, die Batteriemodul-Steuerung CSC-Bus low. Die Anbindung des Stromsensors IS an die Batteriemodulsteuerung CSC-Bus low erfolgt über ein geschirmtes und/oder verdrilltes Leitungssystem.

In der Ausführung nach Figur 2 ist als Stromsensor HS eine einen Hallsensor aufweisende Einrichtung vorgesehen, welche mit der zentralen Einheit ZE des Batterie-Steuergerätes BMU verbunden ist. Da durch die magnetische Messung keine galvanische Trennung mehr erforderlich ist, führt die Sensorleitung geschirmt und/oder verdrillt direkt zur zentralen Einheit der BMU. Grundsätzlich kann die Stromerfassung auch mit einem redundanten System erfolgen.

In den gezeigten Ausführungen - Figur 1 und Figur 2 - sind im Lastpfad insgesamt drei Schaltmittel SM vorgesehen, über welche die Spannung der seriell geschalteten Zellen ZE dem Ausgang DCDC zuführbar ist. Die Schaltmittel SM sind hierbei über die zentrale Einheit ZE des Batterie-Steuergerätes BMU betätigbar und entsprechend über ein geschirmtes und/oder verdrilltes Leitungssystem mit dieser verbunden.

Weiterhin ist in den beiden Ausführungen vorgesehen, an drei Punkten des Lastpfades Spannungsabgriffe SAG vorzunehmen. Die Spannungswerte dieser Abgriffe SAG sind mit der Batteriemodul-Steuerung CSC-Bus low verbunden, und werden dieser über ein geschirmtes und/oder verdrilltes Leitungssystem zugeführt.

Die Leitungen des Ausganges DCDC sind innerhalb eines weiteren Batteriegehäuseteils GHI jeweils durch Ferritringe (oder Vitroperm-Kerne) als Gleichtaktstörungsdämpfer GTD geführt und in Verbindung mit Kondensatoren K zur Masse des HV-Batteriesystems abgeleitet. Ein Kondensator K ist ferner zwischen die beiden Hochvoltleitungen geschaltet.

### Bezugszeichenliste

- DCDC: Ausgang, Schnittstelle Hochvoltspannung
- BMU: Batterie-Steuergerät
- ZE: Zentrale Einheit der BMU
- OK: Optokoppler, induktive Kopplung
- CM: Hochvoltzelle
- AK: Ableitkondensator
- TS: Trennschalter
- CSC: Einrichtung zur Erfassung von Größen wie Temperatur, Spannung
- CSC-Bus high: Batteriemodul-Steuerung
- CSC-Bus low: Batteriemodul-Steuerung
- IS: Stromsensor Shunt
- HS: Stromsensor Hall
- SAG: Spannungsabgriff HV-Leitung, Lastpfad
- SM: Schaltmittel HV-Leitung, Lastpfad
- GTD: Gleichtaktstörungsdämpfer, Ferritkern, Vitroperm-Kern
- GH: Gehäuse Batteriesystem
- GHT: Gehäuseteil, Schirmung
- GHI: Gehäuseteil, Schirmung
- K: Kondensator

## Patentansprüche

1. HV-Batteriesystem für ein Kraftfahrzeug, bestehend aus Zellen (CM) und Komponenten (BMU, ZE, CSC-Bus low, CSC-Bus high) zur Steuerung und Überwachung der Zellen (CM) und der Funktion des Batteriesystems, wobei die Zellen (CM) über Hochvoltleitungen und eine Hochvoltschnittstelle (DCDC) mit außerhalb des Batteriesystems angeordneten Einrichtungen wie insbesondere einem Umrichter verbunden sind, wobei wenigstens den Komponenten zur Steuerung und Überwachung der Funktion des Batteriesystems (BMU, ZE, CSC-Bus low, CSCBus high) ein metallisch leitfähiges Schirmblech, insbesondere in Form eines Gehäuses (GHT) zugeordnet ist, und die nach außen führenden Leitungen der Hochvoltschnittstelle (DCDC) durch Gleichtaktstörungsdämpfer (GTD) geführt sind, **dadurch gekennzeichnet, dass** den Leitungen der Hochvoltschnittstelle (DCDC) nebst der Einrichtung zur Gleichtaktstörungsdämpfung (GTD) ein weiteres Schirmblech, nämlich ein diese Teile aufnehmendes Gehäuse (GHI) zugeordnet ist.

2. HV-Batteriesystem nach Anspruch 1, **dadurch gekennzeichnet, dass** die Leitungen der Hochvoltschnittstelle (DCDC) über Kondensatoren (K) an die Masse des HV-Batteriesystems abgeleitet sind.

3. HV-Batteriesystem nach Anspruch 1 oder 2, **dadurch gekennzeichnet, dass** zwischen den Leitungen der Hochvoltschnittstelle (DCDC) ein Kondensator (K) geschaltet ist.

4. HV-Batteriesystem nach einem der vorhergehenden Ansprüche, **dadurch gekennzeichnet, dass** eine das Batterie-Steuergerät (BMU) bildende Elektronikeinheit mit einer separaten Schirmung bzw. in einem separaten Gehäuseteil (GHT) innerhalb des das HV-Batteriesystem aufnehmenden Gehäuses (GH) angeordnet ist.

5. HV-Batteriesystem nach einem der vorhergehenden Ansprüche, **dadurch gekennzeichnet, dass** Elektronikeinheiten (CSC-Bus low, CSC-Bus high) des Batterie-Steuergerätes (BMU), über welche die Erfassung von Zuständen der Zellen (CM) erfolgt, über geschirmte und/oder verdrillten Leitungen mit den Zellen (CM) zugeordneten Einheiten (CSC) verbunden sind.

6. HV-Batteriesystem nach einem der vorhergehenden Ansprüche, **dadurch gekennzeichnet, dass** die den Zellen (CM) zugeordneten Einheiten (CSC) zur Erfassung von Zuständen der Zellen (CM) über eine Daisy-Chain Kette mit der Elektronikeinheit (CSCBus low, CSC-Bus high) des Batterie-Steuergerätes (BMU) verbunden sind.

7. HV-Batteriesystem nach einem der vorhergehenden Ansprüche, **dadurch gekennzeichnet, dass** die Elektronikeinheiten (CSC-Bus low, CSC-Bus high) des Batterie-Steuergerätes (BMU), über welche die Erfassung von Zuständen der Zellen (CM) erfolgt, über galvanisch entkoppelnde Mittel und insbesondere induktive Koppler (OK) mit einer zentralen Einheit (ZE) des Batterie-Steuergerätes (BMU) verbunden sind.

8. HV-Batteriesystem nach einem der vorhergehenden Ansprüche, **dadurch gekennzeichnet, dass** die Gleichtaktstörungsdämpfer (GTD) der nach außen führenden Hochvoltleitungen als Ferritringe bzw. Vitroperm-Kerne ausgebildet sind.

## Claims

1. HV battery system for a motor vehicle, consisting of cells (CM) and components (BMU, ZE, CSC bus low, CSC bus high) for controlling and monitoring the cells (CM) and the function of the battery system, wherein the cells (CM) are connected to devices arranged outside the battery system such as, in particular, a converter, via high-voltage lines and a high-voltage interface (DCDC), wherein a metallically conductive screening plate, in particular, in the form of a housing (GHT), is assigned at least to the components for controlling and monitoring the function of the battery system (BMU, ZE, CSC bus low, CSC bus high), and the lines of the high-voltage interface (DCDC) which lead to the outside are led through common-mode interference dampers (GTD), **characterized in that** a further screening plate, which is a housing (GHI) accommodating these parts, is assigned to the lines of the high-voltage interface (DCDC) in addition to the device for common-mode interference damping (GTD).

2. HV battery system according to claim 1, **characterized in that** the lines of the high-voltage interface (DCDC) are diverted to the ground of the HV battery system via capacitors (K).

3. HV battery system according to claim 1 or 2, **characterized in that** a capacitor (K) is connected between the lines of the high-voltage interface (DCDC).

4. HV battery system according to one of the preceding claims, **characterized in that** an electronic unit forming the battery control device (BMU) is arranged with a separate screening or in a separate housing part (GHT) inside the housing (GH) accommodating the HV battery system.

5. HV battery system according to one of the preceding claims, **characterized in that** electronic units (CSC bus low, CSC bus high) of the battery control device (BMU) through which the sensing of states of the cells (CM) is performed are connected to units (CSC) assigned to the cells (CM) via screened and/or twisted lines.

6. HV battery system according to one of the preceding claims, **characterized in that** the units (CSC) for sensing states of the cells (CM) assigned to the cells (CM) are connected to the electronic unit (CSC bus low, CSC bus high) of the battery control device (BMU) via a daisy chain.

7. HV battery system according to one of the preceding claims, **characterized in that** the electronic units (CSC bus low, CSC bus high) of the battery control device (BMU) through which the sensing of states of the cells (CM) is performed are connected to a central unit (ZE) of the battery control device (BMU) via galvanically decoupling means and, in particular, inductive couplers (OK).

8. HV battery system according to one of the preceding claims, **characterized in that** the common-node interference dampers (GTD) of the high-voltage lines which lead to the outside are formed as ferrite rings or Vitroperm cores.

## Revendications

1. Système de batterie haute tension pour un véhicule automobile, constitué d'éléments (CM) et de composants (BMU, ZE, CSC-Bus low, CSC-Bus high) permettant de commander et de surveiller les éléments (CM) et la fonction du système de batterie, les éléments (CM) étant reliés par des lignes haute tension et une interface haute tension (DCDC) à des dispositifs agencés à l'extérieur du système de batterie, tels que par exemple un convertisseur, une tôle de blindage métalliquement conductrice, en particulier sous forme d'un boîtier (GHT), étant associée au moins aux composants permettant de commander et de surveiller la fonction du système de batterie (BMU, ZE, CSC-Bus low, CSC-Bus high), et les lignes de l'interface haute tension (DCDC) arrivant à l'extérieur étant guidées par des atténuateurs de perturbation en mode commun (GTD), **caractérisé en ce qu'**une autre tôle de blindage, à savoir un boîtier (GHI) logeant ces pièces, est associée aux lignes de l'interface haute tension (DCDC), en plus du dispositif permettant l'atténuation de perturbation en mode commun (GTD).

2. Système de batterie haute tension selon la revendication 1, **caractérisé en ce que** les lignes de l'interface haute tension (DCDC) sont dérivées sur la masse du système de batterie haute tension par l'intermédiaire de condensateurs (K).

3. Système de batterie haute tension selon la revendication 1 ou 2, **caractérisé en ce qu'**un condensateur (K) est monté entre les lignes de l'interface haute tension (DCDC).

4. Système de batterie haute tension selon l'une quelconque des revendications précédentes, **caractérisé en ce qu'**une unité électronique formant l'appareil de commande de batterie (BMU) est agencée avec un blindage séparé ou dans une partie de boîtier (GHT) séparée à l'intérieur du boîtier (GH) logeant le système de batterie haute tension.

5. Système de batterie haute tension selon l'une quelconque des revendications précédentes, **caractérisé en ce que** des unités électroniques (CSC-Bus low, CSC-Bus high) de l'appareil de commande de batterie (BMU), par l'intermédiaire desquelles la détection d'états des éléments (CM) est réalisée, sont reliées à des unités (CSC) associées aux éléments (CM) par des lignes blindées et/ou câblées.

6. Système de batterie haute tension selon l'une quelconque des revendications précédentes, **caractérisé en ce que** les unités (CSC) associées aux éléments (CM) et destinées à détecter des états des éléments (CM) sont reliées à l'unité électronique (CSC-Bus low, CSC-Bus high) de l'appareil de commande de batterie (BMU) par une connexion en série.

7. Système de batterie haute tension selon l'une quelconque des revendications précédentes, **caractérisé en ce que** les unités électroniques (CSC-Bus low, CSC-Bus high) de l'appareil de commande de batterie (BMU), par l'intermédiaire desquelles la détection des états des éléments (CM) est réalisée, sont reliées à une unité centrale (ZE) de l'appareil de commande de batterie (BMU) par l'intermédiaire de moyens de découplage galvanique et en particulier de coupleurs inductifs (OK).

8. Système de batterie haute tension selon l'une quelconque des revendications précédentes, **caractérisé en ce que** les atténuateurs de perturbation en mode commun (GTD) des lignes haute tension allant jusqu'à l'extérieur sont réalisés sous la forme d'anneaux de ferrite ou de noyaux de vitroperm.
